Europäisches Patentamt

(19) European Patent Office

Office européen des brevets

(11) Numéro de publication: **0 070 801**
**A1**

(12) **DEMANDE DE BREVET EUROPEEN**

(21) Numéro de dépôt: **82810294.7**

(22) Date de dépôt: **09.07.82**

(51) Int. Cl.³: **G 01 N 25/18**, G 01 N 27/18,
G 01 F 1/68, G 01 K 7/24

(30) Priorité: **13.07.81 CH 4563/81**

(43) Date de publication de la demande: **26.01.83**
**Bulletin 83/4**

(84) Etats contractants désignés: **AT BE CH DE FR GB IT LI LU NL SE**

(71) Demandeur: **BATTELLE MEMORIAL INSTITUTE, 7 route de Drize, CH-1227 Carouge/Genève (CH)**

(72) Inventeur: **Boegli, Jean-Charles, Chez Veluz, F-74380 Lucinges (FR)**
Inventeur: **Trouilhet, Yves, Chemin des Tattes 4B, CH-1222 Vesenaz (CH)**

(74) Mandataire: **Dousse, Blasco et al, 7, route de Drize, CH-1227 *Carouge/Genève* (CH)**

(54) **Procédé pour déterminer au moins un paramètre instantané d'un fluide lié à l'échange thermique d'une sonde immergée dans ce fluide et dispositif pour la mise en oeuvre de ce procédé.**

㉝ Ce procédé consiste à porter la température d'une sonde immergée dans le fluide à un seuil de température correspondant à une résistance électrique ($R_1$) à mesurer au moins un second seuil de température correspondant à une seconde résistance ($R_2$, $R_3$) à mesurer le temps écoulé entre le passage à ces différents seuils et à calculer un paramètre du fluide lié au transfert thermique entre la sonde et le fluide, à savoir la température, la vitesse, la viscosité, la densité, la chaleur spécifique ou la conductibilité thermique.

EP 0 070 801 A1

## PROCEDE POUR DETERMINER AU MOINS

## UN PARAMETRE INSTANTANE D'UN FLUIDE LIE A L'ECHANGE

## THERMIQUE D'UNE SONDE IMMERGEE DANS CE FLUIDE

## ET DISPOSITIF POUR LA MISE EN OEUVRE DE CE PROCEDE

La présente invention se rapporte à un procédé pour déterminer au moins un paramètre instantané d'un fluide lié à l'échange thermique d'une sonde immergée dans ce fluide ainsi qu'à un dispositif pour la mise en oeuvre de ce procédé.

On connaît par exemple des débitmètres dans lesquels une sonde à résistivité électrique dépendant de la température est chauffée par effet Joule alors qu'elle est immergée dans un courant de ce fluide. Les variations de débit sont détectées en fonction des variations de résistance électrique de la sonde.

Un débitmètre de ce genre fait notamment l'objet du brevet GB 1 345 324. Selon ce brevet, la puissance de chauffage de la sonde est fournie par un train d'impulsions identiques séparées par des intervalles suffisamment longs pour garantir que la sonde est ramenée à sa température d'équilibre avec le fluide au début de chaque impulsion. Les variations de débit sont détectées par les variations enregistrées d'une impulsion à l'autre dans la vitesse de changement de résistance électrique de la sonde durant une impulsion. Cette vitesse de changement de résistance est donnée par la variation de tension dérivée d'une thermistance immergée dans le fluide. On détecte la pente de la courbe de la variation de tension ou la différence entre les hauteurs des flancs avant et arrière de chaque impulsion. La tension aux bornes de la thermistance est appliquée à un convertisseur tension-fréquence dont la fréquence diminue continûment en fonction de la diminution progressive de tension. Ensuite on com-

0070801

pte la fréquence résultant pendant la durée de l'impulsion et on déduit le débit.

Du point de vue électronique, la plus grande partie du traitement de signal est analogique ce qui conduit à un circuit électronique relativement complexe et par conséquent relativement cher. En outre la transformation de la tension en fréquence variable couvre une plage de mesure assez réduite. Cette remarque est d'ailleurs aussi vraie en ce qui concerne les impulsions de chauffage à puissance constante.

Il existe de nombreux dispositifs ou procédés pour déterminer un paramètre instantané d'un fluide lié à l'échange thermique entre ce fluide et une sonde immergée dans ce fluide. On peut citer par exemple la demande de brevet FR 2,168,458, le DAS 1,252,437, le brevet CH 491.375 ainsi que le brevet US 4,068,526. Tous ces documents sont relatifs à des dispositifs ou procédés de détermination d'un tel paramètre à partir de la mesure d'une grandeur électrique caractéristique d'une première température suivie, après un intervalle de temps donné, de la mesure d'une grandeur électrique caractéristique d'une seconde température. Quelle que soit la grandeur électrique ainsi mesurée, la tension par exemple, cette grandeur analogique doit être transformée en grandeur digitale pour pouvoir être utilisée dans un calculateur programmé pour déterminer ce paramètre. Cette transformation analogique digitale rend le circuit de traitement plus complex donc plus cher. Or, il existe nombre d'applications dans lesquelles un système de mesure électronique pourrait être envisagé compte tenu, notamment, des progrès de la micro-informatique. Pour qu'une telle mesure puisse être effectuée rationellement et que le circuit de traitement puisse être produit à bas prix pour des applications de grande consommation notamment, il faut évidemment pouvoir directement introduire dans le calculateur des données digitales. Par conséquent, les solutions décrites dans les documents susmentionnés ne sont pas adaptées sans autre au traitement par un calculateur et nécessitent toute une interface qui rend le circuit sensiblement plus cher.

Le but de la présente invention est d'apporter une solution qui permette de calculer sur une base purement digitale un paramètre instantané d'un fluide lié à l'échange thermique d'une sonde thermique.

0070801

A cet effet, cette invention a pour objet un procédé pour déterminer au moins un paramètre instantané d'un fluide lié à l'échange thermique d'une sonde immergée dans ce fluide, caractérisé par le fait que l'on porte la température de ladite sonde immergée dans ce fluide à une première valeur déterminée, on fixe au moins une deuxième valeur de la température de cette sonde, on mesure le temps écoulé pour passer de la première à la deuxième valeur de la température et on calcule ledit paramètre instantané.

Cette invention a également pour objet un dispositif pour la mise en oeuvre de ce procédé caractérisé par le fait que ladite sonde est un élément de mesure électrique dont au moins un des paramètres varie en fonction de la température et par le fait qu'il comporte des moyens pour porter la température de cette sonde à ladite première valeur, et un détecteur de seuil à au moins deux niveaux connecté d'une part à cette sonde, d'autre part à un calculateur relié à un organe indicateur.

Compte tenu du nombre de paramètres liés à l'échange thermique, la présente invention offre de nombreuses applications notamment dans le domaine de la mesure des débits instantanés qui peuvent être utilisés dans le cadre des économies d'énergie en particulier.

Le dessin annexé illustre, schématiquement et à titre d'exemple une forme d'exécution et des variantes d'un dispositif pour la mise en oeuvre du procédé objet de la présente invention.

La fig. 1 est un schéma-bloc de ce dispositif.

La fig. 2 est un diagramme des différents signaux.

La fig. 3 est un schéma-bloc d'une variante de ce dispositif.

La fig. 4 est un schéma-bloc d'une autre variante de ce dispositif.

La fig. 5 est un diagramme de la variation de tension enregistrée sur cette dernière variante.

Le procédé objet de l'invention est basé sur le fait que si une sonde est portée à une première température $T_o$ dans un fluide, le temps nécessaire pour que la température de cette sonde atteigne un deuxième voire un troisième seuil de température $T_1$, $T_2$ est une fonction de tous les paramètres du fluide considéré affectant le transfert thermique de cette sonde, à savoir: la température du fluide $T_f$, sa vitesse v, sa viscosité $\mu$, sa densité $\rho$, sa chaleur spécifi-

que c, sa conductibilité thermique $\lambda$ et son coefficient d'échange thermique.

Les temps $\Delta t_1$ et $\Delta t_2$ écoulés entre le passage de la température $T_0$ à la température $T_1$ et de la température $T_1$ à la température $T_2$ peut être mesuré à l'aide d'un microprocesseur après quoi, il est possible, comme on le verra ci-après de calculer un ou plusieurs des paramètres susmentionnés.

De préférence la sonde utilisée est une résistance électrique dont la résistivité est fonction de la température. Cette sonde est chauffée périodiquement jusqu'à la température $T_0$ que l'on détermine en mesurant la tension aux bornes de la sonde et on la laisse ensuite refroidir jusqu'à la température $T_1$ qui correspond à une tension déterminée et ensuite à une température $T_2$ qui correspond à une autre tension déterminée. A l'aide d'une base de temps incorporée dans le microprocesseur, on compte les temps $\Delta t_1$ et $\Delta t_2$ écoulés entre ces trois seuils de tension aux bornes de la sonde. Il est alors possible de calculer la température $T_f$ du fluide et le coefficient d'échange thermique h par les équations suivantes :

$$(T_1 - T_f)/(T_0 - T_f) = (-hS\Delta t_1/m_s c_s)$$

$$(T_2 - T_f)/(T_1 - T_f) = (-hS\Delta t_2/m_s c_s)$$

avec $m_s$ = masse de la sonde
$c_s$ = chaleur spécifique de la sonde
$S$ = surface d'échange sonde/fluide

Selon cette formule on admet que la sonde n'échange de la chaleur qu'avec le fluide.

Le coefficient d'échange thermique h pour une sonde admise cylindrique de diamètre d est donné par le nombre de Nusselt :

$$Nu = \frac{h\,\pi\,d}{2\lambda}$$

Selon VDI Wärmeatlas:

$$Nu = 0,3 + \sqrt{Nu^2_{lam} + Nu^2_{turb}}$$

$$Nu_{lam} = 0,664 \sqrt{Re} \sqrt[3]{Pr}$$

$$Nu_{turb} = \frac{0,037 \, Re_e^{0,8} Pr}{1 + 2,443 \, Re^{-0,1}(Pc^{2/3}-1)}$$

$$\text{avec } Re = \frac{v\pi d\rho}{2\mu} \quad \text{et } Pr = \frac{\mu c}{\lambda}$$

On constate que pour un fluide de viscosité $\mu$, de densité $\rho$, de chaleur spécifique c et de conductibilité thermique $\lambda$ connues, le coefficient d'échange thermique ne dépend que de la vitesse d'écoulement v, de sorte que, connaissant la section de passage du fluide, on en déduit le débit.

Pour un fluide en écoulement, la mesure de deux intervalles de temps permet de calculer simultanément le débit et la température.

Pour un fluide dont la vitesse est nulle la mesure d'un intervalle de temps entre deux seuils de température permet de calculer la température si la conductibilité thermique est connue.

Pour un fluide dont la vitesse est nulle, la mesure de deux intervalles de temps entre trois seuils de température permet de mesurer à la fois la conductibilité thermique du fluide et sa température.

En pratique, il suffit d'utiliser une sonde dont la variation de résistivité en fonction de la température est connue et de mesurer la résistance aux bornes de cette sonde pour déterminer la température de la sonde.

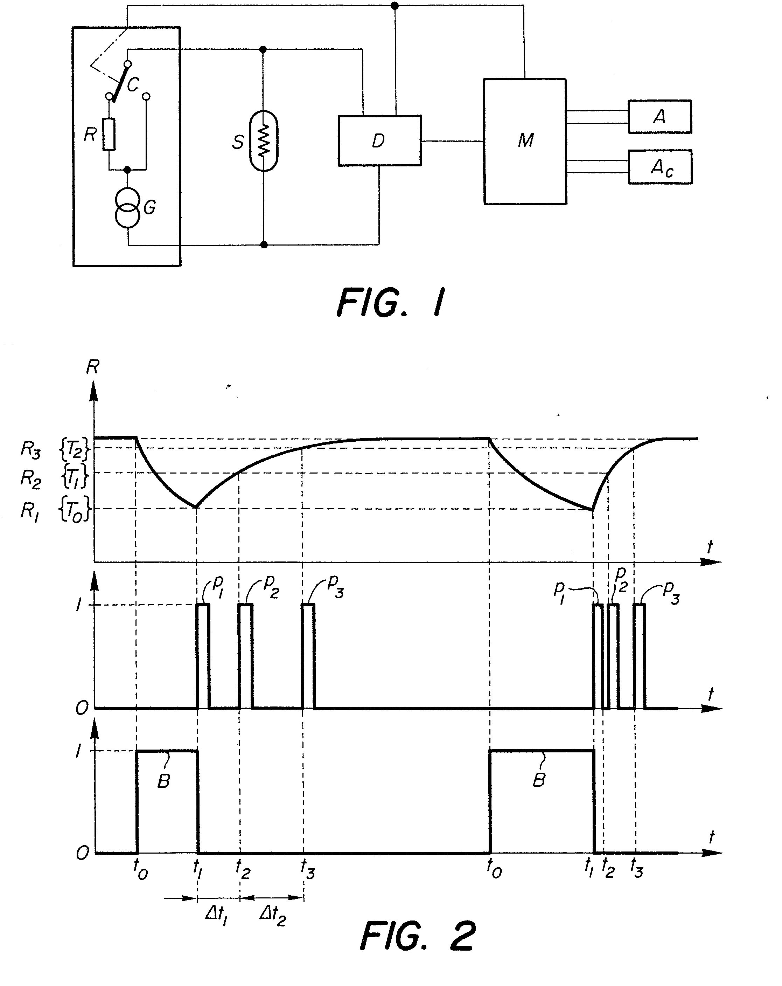

Le dispositif de mesure illustré schématiquement par la fig. 1 comporte une sonde S constituée par une résistance électrique notamment par une thermistance dont les bornes sont connectées à un générateur de courant électrique G par l'intermédiaire d'un commutateur C susceptible de relier la sonde S soit directement au générateur G, soit par l'intermédiaire d'une résistance R dont la valeur est très supérieure à celle de la sonde S. Les bornes de cette sonde sont par ailleurs reliées à un détecteur de seuil à trois niveaux

- 6 -                    0070801

D destiné à détecter trois seuils de tension correspondant à trois niveaux de résistance de la sonde et par là même à trois températures déterminées. Ce détecteur de seuil D est connecté à un microprocesseur M destiné à calculer les paramètres désirés en fonction des temps écoulés pour que la température de la sonde S passe d'un seuil à l'autre. La sortie du microprocesseur est également connectée au commutateur C pour l'amener sélectivement dans l'une ou l'autre de ses positions, ainsi qu'au détecteur de seuil D et à un élément d'affichage A. Un second élément d'affichage $A_c$ peut être prévu pour afficher la consommation totale par intégration du débit instantané par le microprocesseur.

Lors du fonctionnement, au temps $t_o$, une impulsion de courant B est envoyée à travers la sonde S par le générateur G directement connecté aux bornes de cette sonde par le commutateur C. Dès que la résistance électrique de la sonde a atteint une valeur seuil $R_1$ correspondant à une température $T_o$ déterminée, le microprocesseur M fait basculer le commutateur C de manière à alimenter la sonde S à travers la résistance R choisie pour fournir un courant de mesure extrêmement faible, insuffisant pour chauffer la sonde S. A ce moment le microprocesseur M indique au détecteur de seuil D à quel niveau de départ la courbe de mesure partant de $t_1$ doit être relevée pour être amenée au niveau $R_1$ correspondant à la fin de la période de chauffage $t_o-t_1$ pour tenir compte de la chute de tension due à la résistance interne de la sonde. En variante et pour s'affranchir de la chute de tension entre le passage du courant de chauffage et celui du courant de mesure à travers la sonde S, on peut envisager de diviser l'impulsion de chauffage B en incréments, interrompus par de courtes périodes de mesure pendant lesquelles le microprocesseur M fait basculer le commutateur C pour alimenter la sonde en courant de mesure. De cette manière la tension mesurée aux bornes de la sonde sera toujours comparable. Par ailleurs, il est possible de fixer le seuil $T_o$ non pas en coïncidence avec la fin de la période de chauffage, mais quelque part le long de la courbe de refroidissement. A partir de la fin de l'impulsion B le détecteur de seuil D qui a détecté l'intersection de la variation de résistance avec le premier seuil de valeur $R_1$ pour lequel il a été réglé envoie au microprocesseur M, au temps $t_1$ correspondant à la fin de l'impulsion B, une impul-

- 7 -

0070801

sion $p_1$ qui déclenche l'opération de comptage lorsque la variation de résistance mesurée sur la sonde intersecte la deuxième valeur seuil correspondant à la valeur $R_2$, le détecteur de seuil envoie une deuxième impulsion $p_2$ au microprocesseur qui compte le temps $\Delta t_1$ écoulé de $t_1$ à $t_2$. Enfin, lorsque la variation de résistance de la sonde S intersecte la troisième valeur seuil $R_3$ du détecteur de seuil D, au temps $t_3$, le détecteur de seuil D envoie une impulsion $p_3$ au microprocesseur qui compte le temps $\Delta t_2$ écoulé de $t_2$ à $t_3$ et calcule le ou les paramètres pour lequel il a été programmé, selon le processus mathématique susmentionné. La valeur résultante est alors affichée par l'élément d'affichage A. Ensuite, le même processus est répété à intervalles prédéterminés en fonction de l'information désirée. Il n'est pas nécessaire d'attendre que la sonde retrouve la température du fluide pour répéter le processus de mesure. Celui-ci peut débuter dès que le troisième seuil de température a été franchi, dans le cas d'une mesure à trois seuils. A titre d'exemple, le diagramme de la fig. 2 montre deux cycles de mesures, l'un relatif à un débit lent, l'autre à un débit rapide. On remarque que lorsque le débit est lent, le chauffage correspondant à l'intervalle $t_o$ à $t_1$ est rapide tandis que le refroidissement de $t_1$ à $t_3$ est lent. A l'inverse, lorsque le débit est rapide le chauffage est lent et le refroidissement rapide. A titre indicatif, la fréquence des impulsions B peut être de l'ordre de quelques dizaines de Hz, les impulsions B étant de quelques millisecondes. De ce fait, il est possible d'indiquer avec précision et une grande sensibilité le débit instantané ou la température ou tout autre paramètre lié au coefficient d'échange thermique de la sonde.

Le procédé selon l'invention permet encore de calculer le débit massique $\dot{m}$ d'un fluide, ce qui est surtout intéressant dans le cas d'un gaz où la densité $\rho$ est dépendante de la température or

$$\dot{m} = \rho \, v \, s$$

s étant la section de passage du gaz

v étant la vitesse

En mesurant le coefficient d'échange h, on calcule v et en mesurant la température T, on calcule $\rho$.

De très nombreuses applications peuvent être envisagées compte tenu du faible coût du dispositif décrit. Bien entendu l'énumération de quelques-unes de ces applications ne saurait avoir aucun caractère restrictif et n'est donné qu'à simple titre d'exemple.

Parmi celles-ci on peut citer l'indication de la consommation instantanée d'un véhicule automobile. Une telle indication peut aider le conducteur à adopter une conduite adaptée à une consommation réduite en lui permettant de se rendre compte à quel moment sa consommation instantanée est forte. On sait qu'à l'heure actuelle l'introduction d'un microprocesseur est envisagée par les constructeurs automobiles sur l'ensemble de leur gamme. Par conséquent le dispositif indicateur de consommation instantanée ne représente qu'une dépense très faible essentiellement constituée par le détecteur à trois niveaux et l'affichage. En mesurant la température et le débit d'un fluide, on peut envisager de munir les installation de chauffage d'un indicateur de consommation instantanée. La mesure du débit massique peut alors être utilisée pour calculer la puissance thermique Q, par exemple dans le cas d'une installation de chauffage central collective où l'on veut faire payer chaque utilisateur en fonction de l'énergie effectivement consommée:

$$Q = \dot{m}\, Cp\, \Delta T$$

où Cp est la chaleur spécifique du fluide caloporteur et $\Delta T$ la différence de température entre l'entrée et la sortie. On envisage également une gestion et une programmation du chauffage pièce par pièce d'un même appartement à l'aide d'un microprocesseur. L'indicateur de consommation pourrait indiquer à tout moment la valeur de cette consommation par exemple en Kcal ceci par exemple pièce par pièce ou pour l'ensemble de l'appartement.

Comme on l'a vu précédemment, le calcul du paramètre instantané lié à l'échange thermique de la sonde est fonction de la masse de cette sonde. Or, suivant la nature du fluide dont on désire calculer au moins un paramètre, des substances peuvent se déposer sur la sonde et en changer la masse et, par conséquent la chaleur spécifique, modifiant de ce fait la valeur des paramètres calculés. Dans un tel cas, il est envisagé d'effectuer préalablement deux mesures à températures déterminées, mais en s'assurant que la vitesse d'écoulement du fluide est nulle, ce qui permet d'étalonner le processus de mesure et de s'affranchir ainsi des variations de masse de la sonde. Dans le cas d'un véhicule automobile, cet étalonnage peut être effectué au moment où le conducteur tourne la clef de contact, avant la mise en marche proprement dite du moteur, c'est-à-dire, avant que l'essence ne s'écoule entre le réservoir et le carburateur.

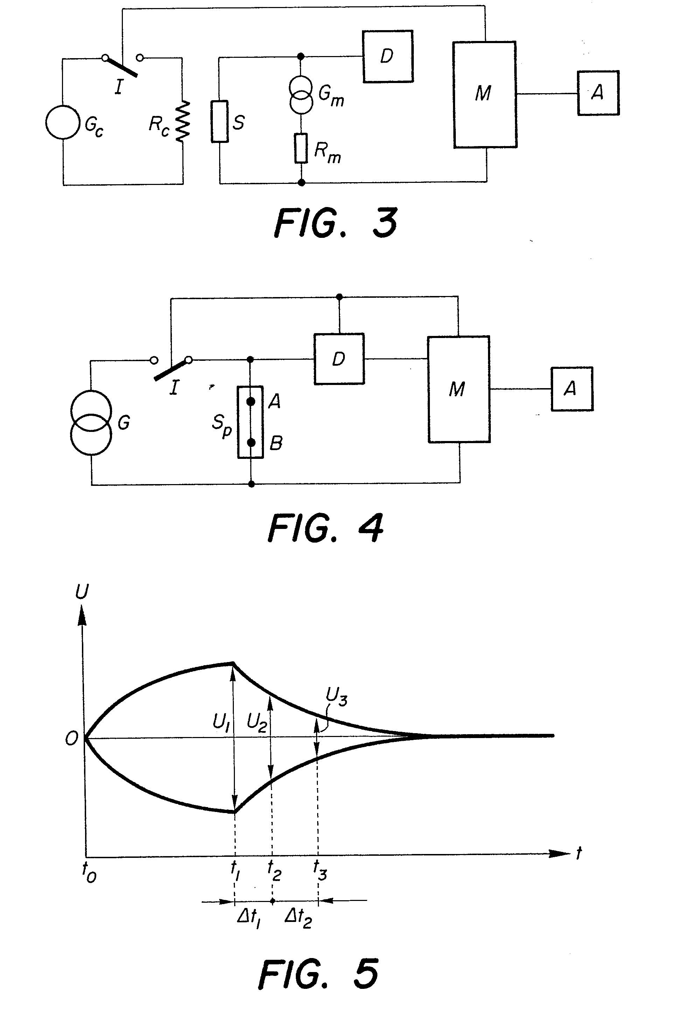

La variante illustrée par la fig. 3 représente un schéma de circuit dans lequel la sonde S est chauffée indirectement par une résistance de chauffage $R_c$ alimentée par un générateur $G_c$ connecté à la résistance de chauffage par un interrupteur I commandé par le microprocesseur M comme décrit pour la forme d'exécution de la fig. 1. La sonde S est alimentée pour la mesure par une générateur de courant $G_m$ par l'intermédiaire d'une résistance $R_m$ dont la valeur est très supérieure à celle de la sonde. Etant donné que les courants et tensions de chauffage sont galvaniquement isolés de la sonde S, le microprocesseur M n'agit plus sur de détecteur de seuil D comme dans le schéma de la fig. 1.

La fig. 4 se rapporte à une autre variante dans laquelle la sonde $S_p$ est formée par un élément Peltier dont les deux jonctions A et B sont plongées dans le fluide à mesurer et qui est alimentée par un générateur de courant G par l'intermédiaire d'un interrupteur I commandé par le microprocesseur M. Comme dans l'exemple de la fig. 1, le microprocesseur M est connecté au détecteur de seuil D pour ramener le point de départ de la courbe de mesure au niveau de tension $U_1$ (fig. 5) correspondant à la tension de fin de refroidissement de l'élément Peltier pour tenir compte de la chute de tension due à la résistance interne de cet élément Peltier.

Le fonctionnement de cette variante est le suivant: le générateur de courant G alimente l'élément Peltier $S_p$ et le détecteur de seuil mesure la différence de potentiel à ses bornes consécutive au refroidissement de la jonction froide et au réchauffement de la jonction chaude A et B. Comme le montre le diagramme on atteint le premier seuil $U_1$ correspondant à une différence de potentiel caractéristique d'un premier seuil de température. A ce moment, le détecteur de seuil D donne son information au microprocesseur M qui ouvre l'interrupteur I. Le fluide qui circule tend alors à ramener la température des jonctions A et B à une valeur commune correspondant à la température de ce fluide et à une différence de potentiel nulle. Cette réduction de l'écart des températures des points A et B produit une variation de tension qui tend vers zéro et durant cette variation de tension due à l'effet Seebeck, on mesure les temps $\Delta t_1$ et $\Delta t_2$ pour passer de la variation de tension $U_1$ à la variation de tension $U_2$ puis $U_3$, préalablement fixée par le détecteur de seuil. Le traitement mathématique est identique à celui qui a été exposé précédemment. Cette variante est intéressante notamment pour la mesure des fluides chauds.

REVENDICATIONS

1. Procédé pour déterminer au moins un paramètre instantané d'un fluide lié à l'échange thermique d'une sonde immergée dans ce fluide, caractérisé par le fait que l'on porte la température de ladite sonde immergée dans ce fluide à une première valeur déterminée, on fixe au moins une deuxième valeur de la température de cette sonde, on mesure le temps écoulé pour passer de la première à la deuxième valeur de la température et on calcule ledit paramètre instantané.

2. Procédé selon la revendication 1, caractérisé par le fait que l'on fixe une troisième valeur de la température de cette sonde, on mesure les temps écoulés pour passer de la première à la deuxième et de la deuxième à la troisième valeur de la température et on calcule au moins un paramètre lié au coefficient d'échange thermique et la température du fluide.

3. Procédé selon l'une des revendications 1 et 2, caractérisé par le fait que l'on répète le même processus de mesure à partir du dernier seuil de température fixé.

4. Dispositif pour la mise en oeuvre du procédé selon la revendication 1, caractérisé par le fait que ladite sonde est un élément de mesure électrique dont au moins un des paramètres varie en fonction de la température et par le fait qu'il comporte des moyens pour porter la température de cette sonde à ladite première valeur, et un détecteur de seuil à au moins deux niveaux connecté d'une part à cette sonde, d'autre part à un calculateur relié à un organe indicateur.

5. Dispositif selon la revendication 4, caractérisé par le fait que ladite sonde est un élément de chauffage par effet Joule dont la résistance varie en fonction de la température.

6. Dispositif selon la revendication 5, caractérisé par le fait que cette sonde est une thermistance.

7. Dispositif selon la revendication 4, caractérisé par le fait que cette sonde est un élément thermoélectrique dont on dispose les jonctions chaude et froide dans ledit fluide, et dont on mesure la variation de tension aux bornes.

FIG. 1

FIG. 2

**FIG. 3**

**FIG. 4**

**FIG. 5**

## DOCUMENTS CONSIDERES COMME PERTINENTS

| Catégorie | Citation du document avec indication, en cas de besoin, des parties pertinentes | Revendication concernée |
|---|---|---|
| D,A | GB-A-1 345 324  (NATIONAL RESEARCH DEVELOPMENT CORP.) *Page 1, ligne 55 - page 2, ligne 87; figures 1,2* | 1,3,4, 6 |
| A | FR-A-2 009 392  (SIEMENS AG) *Page 7, lignes 1-11; figures 3,5* & CH - A - 491 375 (Cat. D) | 1,4,5 |
| A | US-A-4 059 982  (H.F.BOWMAN) *Colonne 6, lignes 1-31; colonne 7, lignes 27-38; figure 1* | 1,4,6 |
| A | US-A-4 106 331  (J.D.BUNTON et al.) *Colonne 1, ligne 65 - colonne 2, ligne 7, colonne 2, lignes 47-60* | 1,4 |
| A | US-A-3 927 571  (S.E.ATHEY) *Colonne 3, lignes 48-68; figure 2* | 1,4,6 |
| A | FR-A-2 193 487  (OFFICE NATIONAL D'ETUDES ET DE RECHERCHES AEROSPATIALES) *Page 11, lignes 1-17; ligne 25 - page 12, ligne 2* | 1-4,6 |
| A | DE-A-3 037 340  (HITACHI LTD.) *Page 12, deuxième et troisième alinéas; figure 4* | 1,4 |

---    -/-

**CLASSEMENT DE LA DEMANDE (Int. Cl. ³)**

G 01 N   25/18
G 01 N   27/18
G 01 F    1/68
G 01 K    7/24

**DOMAINES TECHNIQUES RECHERCHES (Int. Cl. ³)**

G 01 N   25/18
G 01 N   27/18
G 01 N   27/14
G 01 N   11/00
G 01 N    9/00
G 01 F    1/68
G 01 F    1/78
G 01 K    1/20
G 01 K    1/24

Le présent rapport de recherche a été établi pour toutes les revendications

| Lieu de la recherche | Date d'achèvement de la recherche | Examinateur |
|---|---|---|
| LA HAYE | 08-11-1982 | KEMPIN H.F |

Office européen
des brevets

**RAPPORT DE RECHERCHE EUROPEENNE**

0070801
Numéro de la demande

EP   82 81 0294

| | **DOCUMENTS CONSIDERES COMME PERTINENTS** | | Page   2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 216 675  (K.NAGATA et al.) <br> *Colonne  3, lignes 50-58; figure 2* | 5 | |
| A | US-A-3 485 099  (J.B.COLLINS) <br> *Abrégé* | 7 | |
| | | | **DOMAINES TECHNIQUES RECHERCHES (Int. Cl. ³)** |

*Le présent rapport de recherche a été établi pour toutes les revendications*

| Lieu de la recherche | Date d'achèvement de la recherche | Examinateur |
|---|---|---|
| LA HAYE | 08-11-1982 | KEMPIN H.F |